# EUROPÄISCHE PATENTANMELDUNG

(11) **EP 2 933 616 A1**
(43) Veröffentlichungstag der Anmeldung: **21.10.2015**
(21) Anmeldenummer: 14164765.1
(22) Anmeldetag: 15.04.2014
(51) Int. Cl.: G01H 1/00

(54) **Verfahren zur Ermittlung von Schäden in Turbinenschaufeln**

(71) Anmelder: Siemens Aktiengesellschaft, 80333 München (DE)
(72) Erfinder: Jung, Michael, 45133 Essen (DE); Linnemann, Uwe, 41515 Grevenbroich (DE)

(57) **Zusammenfassung**

Die Erfindung betrifft ein Verfahren zur Ermittlung von Schäden an Schaufeln, wobei ein erstes Referenzsignal aus der ersten Inbetriebnahme durch Tip-Timing-Verfahren entnommen wird und dieses Signal mit zyklischem Erfassen von Daten bei späteren Aufnahmen der Schaufel verglichen werden und somit Schäden darstellbar sind.

## Beschreibung

Die Erfindung betrifft ein Verfahren zur Ermittlung von Schäden in Schaufeln.

Grundsätzlich ist die berührungslose Schaufelschwingungsmessung (BSSM) an Laufschaufeln aus dem Stand der Technik, im internationalen Bereich häufig unter dem Namen Tip-Timing, bekannt. Diese Messungen sind erforderlich, da während des Betriebes auf die Schaufeln hohe statische und wechselnde aerodynamische Kräfte wirken, welche die Schaufeln zu Schwingungen anregen. Unter anderem können dafür die Druckverteilungen in der Strömung aufgrund der Einlaufgeometrie, Veränderungen des Spalts zwischen Schaufelspitzen und Gehäuse verursacht durch Ovalisierung des Gehäuses, oder die Statorgitter verantwortlich sein.

Starke Schwingungen können zu einer Schadensbildung in Form von Rissen in den Schaufeln und letztendlich zu Schaufelversagen führen, was den Totalausfall einer Strömungsmaschine bewirken kann.

Berührungslose Schaufelschwingungsmesssysteme (BSSM) werden daher eingesetzt, um die Schaufelschwingungen an den Schaufelspitzen zu überwachen und verlässlich die Lebensdauer der Laufschaufeln vorhersagen zu können, wobei die Verfahren zum Teil auch gleichzeitig den Radialspalt zwischen den Schaufelspitzen und dem Gehäuse messen können.

Für die Schwingungsmessungen müssen die genauen Positionen der Sensoren am Umfang des Gehäuses bekannt sein, was im Ruhezustand durch einfaches Ausmessen der jeweiligen Sensorposition erfolgen kann.

Aufgabe der Erfindung ist es, ein Verfahren anzugeben, mit dem es möglich ist, Schäden in einer Turbinenschaufel während des Betriebes zu ermitteln.

Gelöst wird diese Aufgabe durch ein Verfahren zur Ermittlung von Schäden in Schaufeln, mit den Schritten:
- Ermittlung von Referenz-Daten mittels eines Erfassungsverfahrens
- Ablegen der Referenz-Daten als Referenzdatei
- Zyklische Ermittlung von Messdaten
- Ablegen der Messdaten als Vergleichsdatei
- Ermittlung einer Übertragungsfunktion, wobei die Messdaten mit den Referenz-Daten zu Übertragungsdaten verglichen werden
- Ermittlung einer gemittelten Übertragungsfunktion, wobei die Übertragungsdaten durch mathematische Operationen zu gemittelten Übertragungsdaten übertragen werden
- Ermittlung von Schäden aus den gemittelten Übertragungsdaten.

Vorteilhafte Weiterbildungen sind in den Unteransprüchen angegeben.

Die Erfindung wird durch ein Verfahren beschrieben, bei dem die automatisierte Erkennung von Veränderungen einer Materialstruktur auf Basis von sogenannten "Tip-Timing" Messdaten erfolgt.

Dabei werden zunächst Referenz-Daten mittels eines Erfassungsverfahrens ermittelt. Diese Referenz-Daten werden vorteilhafter Weise durch das Blade-Tip-Timing (BTT) -Verfahren, dem Arrival-Time-Analysis (ATA) -Verfahren, dem Blade-Vibration-Monitoring (BVM) -Verfahren oder dem Blade-Health-Monitoring (BHM) -Verfahren eingesetzt. Diese Messung erfolgt möglichst bei der Inbetriebnahme der Schaufeln. Daher kann davon ausgegangen werden, dass diese Referenz-Daten ein Messsignal liefern, bei denen die Schaufeln keinen Schaden aufweisen.

Diese Referenz-Daten werden als Referenz-Datei in einem geeigneten Automatisierungsgerät abgelegt und können jederzeit aus einem Speicher wieder abgerufen und visualisiert werden und mit anderen Daten verglichen werden.

Als nächster Schritt erfolgt eine zyklische Ermittlung von Messdaten. Hierbei wird mit einem der vorgenannten Erfassungsverfahren Messdaten zyklisch erfasst und als Vergleichsdatei in einem Speicher abgelegt. In dem Automatisierungsgerät können nun die Vergleichsdateien aufgerufen werden und die Messdaten gezeigt werden und mit den Referenz-Daten aus der Referenz-Datei verglichen werden. Darüber hinaus kann der Vergleich visualisiert werden über einen geeigneten Ausgabebildschirm.

In einem nächsten Schritt wird eine Übertragungsfunktion ermittelt, wobei die Messdaten mit den Referenz-Daten zu Übertragungsdaten verglichen werden. Diese Ermittlung der Übertragungsfunktion wird auch als Force-Response-Funktion bezeichnet und wird dadurch ermittelt, dass geometrisch gewichtete Übertragungsfunktionen Hv(x,y)=(Gxy/|Gxy|)*sqr(Gyy/Gxx) berechnet werden.

In einem nächsten Schritt wird die so gewonnene Übertragungsfunktion gemittelt, wobei die Übertragungsdaten durch mathematische Operationen zu gemittelten Übertragungsdaten übertragen werden. Dies wird folgendermaßen ermittelt:
- Berechnung eines Durchschnitts der Übertragungsdaten
- Subtraktion der Übertragungsdaten mit dem Durchschnitt (dadurch Verschieben der Übertragungsdaten auf Y-Achse nach unten).

In einem nächsten Schritt werden schließlich Schäden aus der gemittelten Übertragungsfunktion ermittelt und in einem finalen Schritt graphisch dargestellt.

Dazu werden schaufelindividuelle Abweichungen (Streuung und absolute Abweichung) vom Durchschnitt als normiertes Merkmal (0..1) (gewichtet verknüpft) ausgegeben.

Erfindungsgemäß wird ein Toleranzband für die Detektion von Abweichungen zur mittleren Übertragungsfunktion ermittelt und ein Schaden dadurch erkannt und kenntlich gemacht, in dem Abweichungen außerhalb des Toleranzbandes erkannt werden.

Mit der Erfindung wird somit der Weg eingeschlagen, nicht wie bisher ein Ausgangssignal mit einem Eingangssignal zu vergleichen, sondern die Übertragungsfunktion derart zu ermitteln, dass zwei Ausgangssignale benutzt werden.

Die Kenntnis des Eingangs ist somit gar nicht erforderlich.

Der Eingang wird mit anderen Worten durch die Referenzdatei ersetzt. Somit kommt dieses erfindungsgemäße Verfahren ohne die Annahme der Kenntnis einer Anregungsfunktion, die gemessen oder theoretisch berechnet werden kann nicht zum Tragen. Vielmehr ist das erfindungsgemäße Verfahren besonders an in Betrieb befindlichen Maschinen von Vorteil, bei denen es zu variablen Anregungsmechanismen kommt. Für das erfindungsgemä-ße Verfahren werden zwei Datensätze zur Erzeugung der Übertragungsfunktion verwendet. Die Referenzdatei wird als Input benutzt und die zeitlich folgend aufgenommen Datei (Vergleichsdatei) als Output verwendet. Bei gleichbleibender Erregungsfunktion und ohne Änderung der Systemeigenschaften ergibt sich nun ein konstantes Ausgangssignal. Bei einer Änderung der Erregung und ohne Änderung der Systemeigenschaften zeigen alle Messkanäle, wie hier die Turbinenschaufeln, eine nahezu identische Änderung, welche auf die Änderung der Erregerfunktion zurückzuführen ist. Sollte jedoch zusätzlich zur Änderung der Erregerfunktion eine partielle schaufelabhängige Strukturänderung wie z.B. ein Materialbruch oder ein Riss auftreten, so zeigt sich dies in einer Abweichung zu den unveränderten Strukturen in der Schaufel.

Dies wird durch einen erfindungsgemäßen Schritt erkannt und kenntlich gemacht, wobei diese partielle Abweichung dargestellt wird. Dazu werden bestimmte Gewichtungen durchgeführt und die Ergebnisse dann graphisch oder tabellarisch ausgegeben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wozu Erläuterungen dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: Referenz-Daten,
- Figur 2: Messdaten,
- Figur 3: Übertragungsfunktion,
- Figur 4: gemittelte Übertragungsfunktion,
- Figur 5: graphische Darstellung von Schäden.

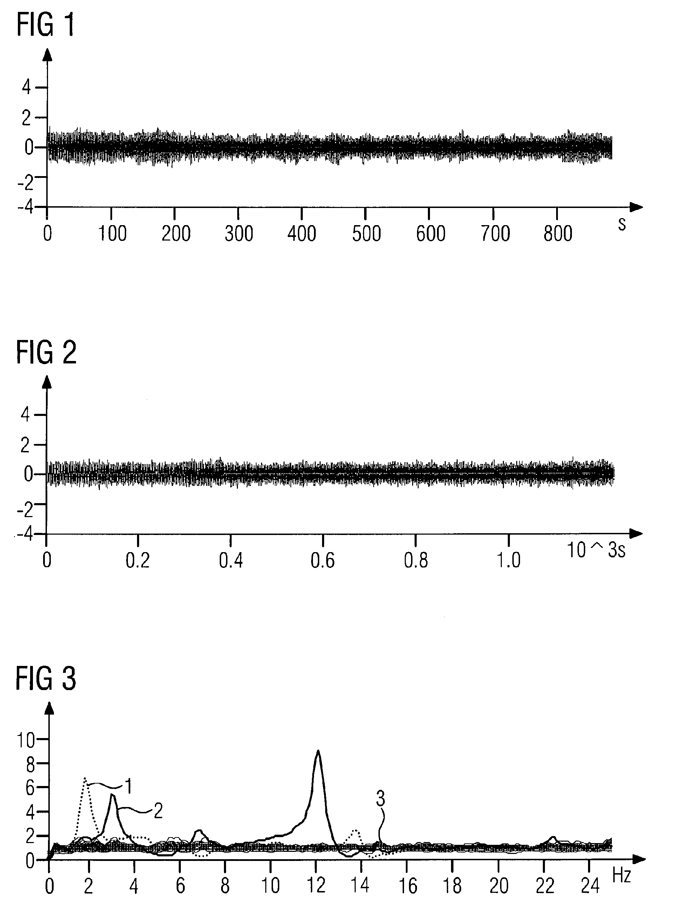

Die Figur 1 zeigt die graphische Darstellung von Referenz-Daten, die mittels eines Erfassungsverfahrens, wie beispielsweise das Blade-Tip-Timing (BTT) -Verfahren, Arrival-Time-Analysis (ATA) -Verfahren, Blade-Vibrations-Monitoring (BVM) -Verfahren oder Blade-Health-Monitoring (BHM) -Verfahren erzeugt werden. Die Referenz-Daten sind als Zeitsignal aufgenommen, wobei die X-Skala die Zeitskala in Sekundeneinheiten darstellt.

Die Y-Skala zeigt das in elektrischer Spannung gemessene Signal der Referenz-Daten. Die Referenz-Daten werden bei der ersten Inbetriebnahme der Schaufeln aufgenommen. Daher kann davon ausgegangen werden, dass während der ersten Inbetriebnahme die Referenz-Daten ein Signal zeigen, bei der keine Störung bzw. kein Schaden in der Schaufel zu finden ist. Dazu sollten die Schaufeln vor der ersten Inbetriebnahme durch geeignete Analyseverfahren nochmalig auf Schäden, wie z.B. Risse, untersucht werden.

Die Referenz-Daten werden in einer Referenzdatei in einem geeigneten Auswertegerät abgespeichert bzw. abgelegt.

Die Figur 2 zeigt Messdaten, die zyklisch ermittelt werden. Das bedeutet, dass das Verfahren in zeitlich aufeinanderfolgender Reihenfolge immer wieder Ausgangssignale misst und sie als Messdaten in einer Vergleichsdatei ablegt. Diese Vergleichsdatei kann ebenfalls in dem Auswertegerät abgelegt werden. Die Figur 2 zeigt ebenfalls eine graphische Darstellung der Vergleichsdatei, die beispielsweise einige Zeit nach der ersten Messung (siehe Figur 1) ermittelt wurde. Die X-Skale zeigt die Zeit in Sekunden, wobei die Y-Skala das erfasste Signal in Volt darstellt.

Die beiden als Zeitsignal ermittelten Referenz-Daten und Messdaten werden nun miteinander derart verarbeitet, dass sie zu einer Übertragungsfunktion abgebildet werden. Daher wird in einem nächsten Verfahrensschritt eine Übertragungsfunktion ermittelt, wobei die Messdaten mit den Referenzdaten zu Übertragungsdaten verglichen werden. Diese Übertragungsdaten sind in der Figur 3 dargestellt. Die Y-Achse ist das Übertragungsdatensignal und auf der X-Achse die Frequenz in Hertz. Jede Linie in der Figur 3 ist einer Schaufel zuzuordnen. Man erkennt, dass die meisten Linien bei einem Wert von 0 ein geringes Signal zeigen. Zwei Linien (Linie 1 und Linie 2) zeigen ein größeres Signal. Die Linie 1 zeigt bei ca. 2Hz und ca. 13,8Hz ein deutliches Signal, wobei die Linie 2 bei 3Hz, 7Hz und 12Hz ein erkennbares Signal zeigt. In einem nächsten Verfahrensschritt wird die Übertragungsfunktion aus Figur 3, in der die Übertragungsdaten dargestellt sind, umgewandelt in eine gemittelte Übertragungsfunktion, wobei die Übertragungsdaten aus Figur 3 durch mathematische Operationen zu gemittelten Übertragungsdaten übertragen werden.

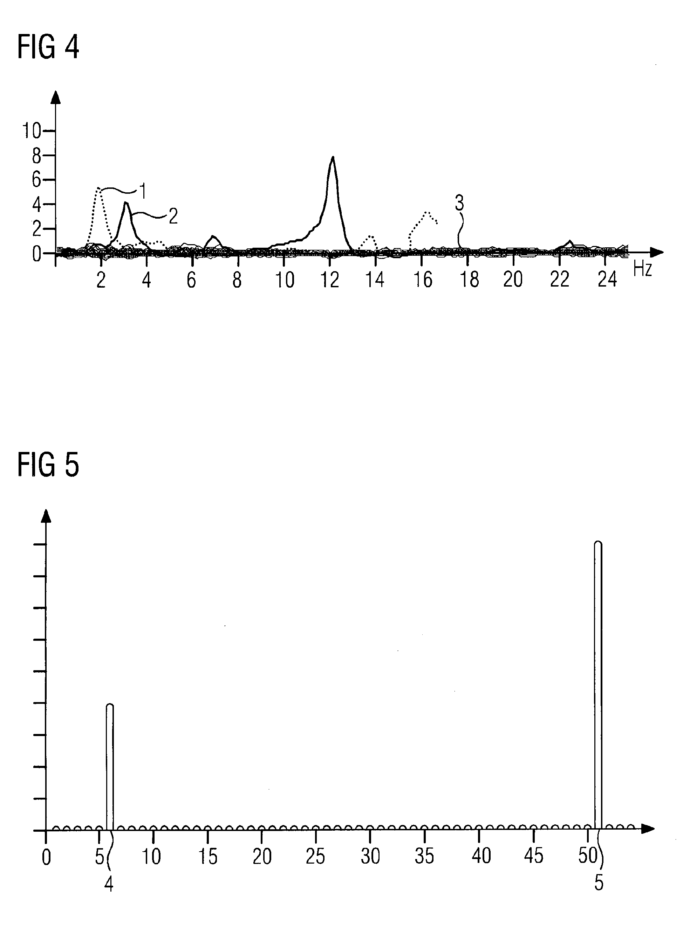

Wie aus Figur 4 ersichtlich, die diese gemittelten Übertragungsdaten darstellt, ist in der Y-Achse im Wesentlichen ein Offset zu erkennen. Dies führt dazu, dass die Signale der Linie 1 und 2 gegenüber den übrigen Signalen 3 besser zu erkennen sind. Die Figur 4 zeigt ebenfalls in der X-Achse eine in Hertz dargestellte Skala und in Y-Achse das Signal der gemittelten Übertragungsdaten.

In einem nächsten Schritt, der in Figur 5 dargestellt wird, werden Schäden an Schaufeln visuell dargestellt. In der Figur 5 ist zu sehen, dass zwei Schaufeln, nämlich Schaufel 4 und Schaufel 5, die der Position 6 und 51 zugeordnet sind, ein Toleranzband überschreitet, das zur Detektion von Abweichungen zu mittleren Übertragungsfunktion darstellt. Daher ist deutlich, dass diese beiden Schaufeln 4, 5 (bzw. Schaufeln an den Positionen 6 und 51) einen Schaden aufweisen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ermittlung von Schäden in Schaufeln, mit den Schritten:
- Ermittlung von Referenz-Daten mittels eines Erfassungsverfahrens,
- Ablegen der Referenz-Daten als Referenzdatei,
- zyklische Ermittlung von Messdaten,
- Ablegen der Messdaten als Vergleichsdatei,
- Ermittlung einer Übertragungsfunktion, wobei die Messdaten mit den Referenz-Daten zu Übertragungsdaten verglichen werden,
- Ermittlung einer gemittelten Übertragungsfunktion, wobei die Übertragungsdaten durch mathematische Operationen zu gemittelten Übertragungsdaten übertragen werden,
- Ermittlung von Schäden aus den gemittelten Übertragungsdaten.

2. Verfahren nach Anspruch 1,
wobei als Erfassungsverfahren ein Blade-Tip-Timing (BTT) -Verfahren, ein Arrival-Time-Analysis- (ATA) -Verfahren, ein Blade-Vibration-Monitoring (BVM) -Verfahren oder ein Blade-Health-Monitoring (BHM) -Verfahren eingesetzt wird.

3. Verfahren nach Anspruch 1oder 2,
wobei die Referenz-Daten bei einer Messung während der Inbetriebnahme ermittelt werden.

4. Verfahren nach einem der vorhergehenden Ansprüche,
wobei die Übertragungsfunktion (Frequenzdarstellung) folgender Maßen aus den Messdaten (Zeitsignal) und den Referenz-Daten (Zeitsignal) ermittelt wird.

5. Verfahren nach einem der vorhergehenden Ansprüche,
wobei die gemittelte Übertragungsfunktion folgender Maßen übermittelt wird:
- Berechnung eines Durchschnitts der Übertragungsdaten,
- Subtraktion der Übertragungsdaten mit dem Durchschnitt

6. Verfahren nach einem der vorhergehenden Ansprüche, wobei die Ermittlung von Schäden aus den gemittelten Übertragungsdaten erfolgt, indem die schaufelindividuelle Abweichung (Streuung & absolute Abweichung) vom Durchschnitt (gewichtet verknüpft) als normiertes Merkmal (0 .. 1) ausgegeben wird.
